# EUROPEAN PATENT APPLICATION

(11) **EP 2 120 423 A1**
(43) Date of publication of application: **18.11.2009**
(21) Application number: 09708763.9
(22) Date of filing: 13.01.2009
(51) Int. Cl.: H04M 1/00

(54) **METHOD, SYSTEM AND APPARATUS FOR REALIZING VOICE CALL**

(30) Priority: 04.02.2008 CN 200810057689
(71) Applicant: Shenzhen Huawei Communication Technologies Co., Ltd, Shenzhen, Guangdong 518129 (CN)
(72) Inventor: ZHANG, Kai, Shenzhen Guangdong 518129 (CN)
(74) Representative: Charles, Glyndwr
(86) International application number: PCT/CN2009/070121
(87) International publication number: WO 2009/097764

(57) **Abstract**

The present invention discloses a method, a system, and a device for implementing a call. In the embodiments of the present invention, related functional modules are added to the PC 110 and VoIP terminal 130, the call information confirmed by the calling party undergoes voice call processing, and the VoIP terminal 130 initiates a voice call to the called party based on the call information, thus conveniently and quickly implementing a VoIP call at low cost. In addition, in the embodiments of the present invention, the current call status information of this voice call may be sent to the homing PC and PSTN terminal of the calling party to enable the calling party to continue this call through the PSTN terminal or PC, facilitating the user in selecting a device, such as a common telephone, for communication.

## Description

### CROSS-REFERENCE TO RELATED APPLICATION

This application claims priority to Chinese Patent Application No. 200810057689.6, filed with the Chinese Patent Office on February 4, 2008 and entitled "Method, System and Device for Implementing a Voice Call", which is hereby incorporated by reference in its entirety.

### FIELD OF THE INVENTION

The present invention relates to the telecommunication field, and in particular, to a system, a device and a method of implementing a voice call.

### BACKGROUND

The Voice over Internet Protocol (VoIP) technology transmits voice over an IP-enabled network. The VoIP technology can reduce the telecommunication cost. Therefore, the VoIP has become one of the most widely used telecommunication technologies.

In the common communication mode, a call is made by using a Public Switched Telephone Network (PSTN) terminal, such as an ordinary phone, with a VoIP voice processing terminal. Such VoIP calls tend to replace the traditional PSTN voice calls.

When implementing this invention, the inventor finds that a user needs to find out a phone number in the phone book before dialing the number to make a VoIP call using a PSTN terminal with the existing technology. An ordinary PSTN line does not support or cannot provide a convenient or effective function for querying a number online. Therefore, this mode requires a user to dial the numbers. The user needs to repeat the preceding operation if an incorrect number is dialed, the call is not connected, or the dialed number is busy. Certain PSTN terminals can store phone numbers or support interactive search through screens. Such terminals, however, cost a lot and bring extra tariff. In addition, it is not convenient to use a PSTN terminal for operations such as text input and search.

When implementing this invention, the inventor also finds that the software in a personal computer (PC) can implement VoIP calls and support convenient address book search. Such applications, however, implement calls between PCs. That is, both communication parties must be PCs. The parties must be online at the same time to implement real-time VoIP communication. In addition, such applications cannot implement direct VoIP communication between a PC and a PSTN terminal due to factors such as restrictions of current telecommunication policies.

Further, the inventor finds that certain earlier products allow a PC to originate a call and a called PSTN terminal to directly answer the call through conversion of narrowband analog signals or through combination. Such a system, however, requires a user to install a narrowband telephone card in the PC. The application is not convenient.

### SUMMARY

A method, a system and a device for implementing a voice call are provided in embodiments of the present invention to conveniently and quickly initiate a voice call by using a PC at low cost and perform VoIP communication through entities such as PSTN terminals.

A method for implementing a voice call is provided in an embodiment of the present invention. The method includes:
receiving the call information sent by a PC; and
initiating a voice call to a called party, and sending status information about the current voice call to the PC and a PSTN terminal.

A system for implementing a voice call is provided in an embodiment of the present invention. The system includes:
a PC, adapted to: receive call information confirmed by a calling party, send the call information to a VoIP after performing voice call processing for the call information, receive the current call status information, and send the current call status information to the calling party;
a VoIP terminal, adapted to: receive the call information sent by the PC, initiate a voice call to a called party based on the call information, and send the current call status information to the PC and a PSTN terminal; and
a PSTN terminal, adapted to: receive the current call status information, send the current call status information to the calling party, and exchange information with the VoIP terminal to complete the voice call if the calling party selects VoIP communication by the PSTN terminal.

A device for implementing a voice call that is provided in an embodiment of the present invention is loaded in a PC. The device includes:
a called party information providing module, adapted to provide information about the called party to the calling party through an interactive interface;
a call information receiving module, adapted to receive the call information confirmed by the calling party; and
a voice call processing module, adapted to perform voice call processing for the call information received by the call information receiving module, and send the call information after processing to the VoIP terminal.

A VoIP terminal for implementing a voice call is provided in an embodiment of the present invention. The VoIP terminal includes:
a call information receiving and processing module, adapted to receive the call information sent by the PC and perform internal protocol processing for the received call information;
a voice call initiating module, adapted to initiate a voice call to the called party based on the call information after internal protocol processing; and
a call status information feedback module, adapted to feed back the current call status information to the PC and PSTN terminal.

As shown in the preceding technical scheme provided in the present invention, in the embodiments of the present invention, the call information received from the PC is used to initiate a voice call to the called party, and the current call status information is sent to the PC and PSTN terminal, thus conveniently and quickly implementing a VoIP voice call at low cost. In addition, the VoIP terminal can feed back the call status information to the homing PC of the calling party and the PSTN terminal, facilitating customized voice communication of the calling party.

### BRIEF DESCRIPTION OF THE DRAWINGS

FIG. 1 is a schematic diagram showing a structure of a system provided in an embodiment of the present invention;
FIG. 2 is a schematic diagram showing a structure of a device that implements a voice call in a PC provided in an embodiment of the present invention;
FIG. 3 is a schematic diagram showing a structure of a VoIP terminal provided in an embodiment of the present invention; and

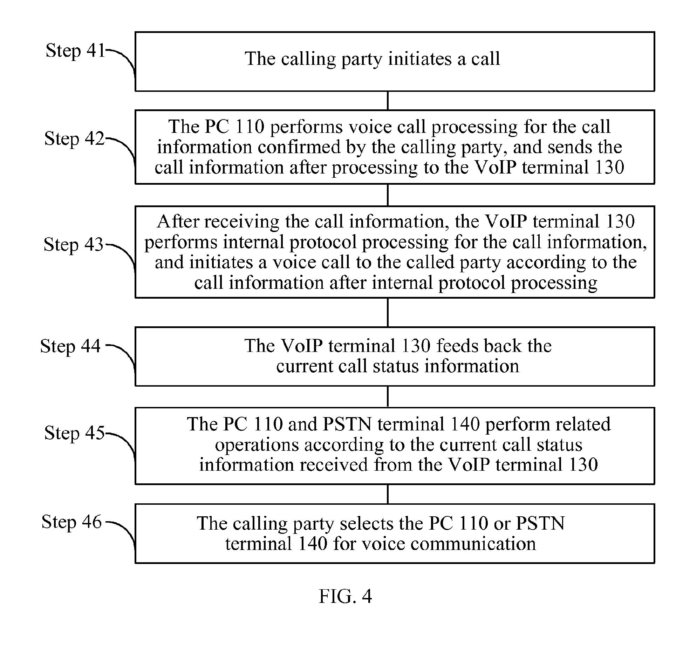

FIG. 4 is a schematic diagram showing a flowchart of implementing a method provided in an embodiment of the present invention.

### DETAILED DESCRIPTION

To facilitate understanding, the embodiments of the present invention are described herein with reference to some accompanying drawings.

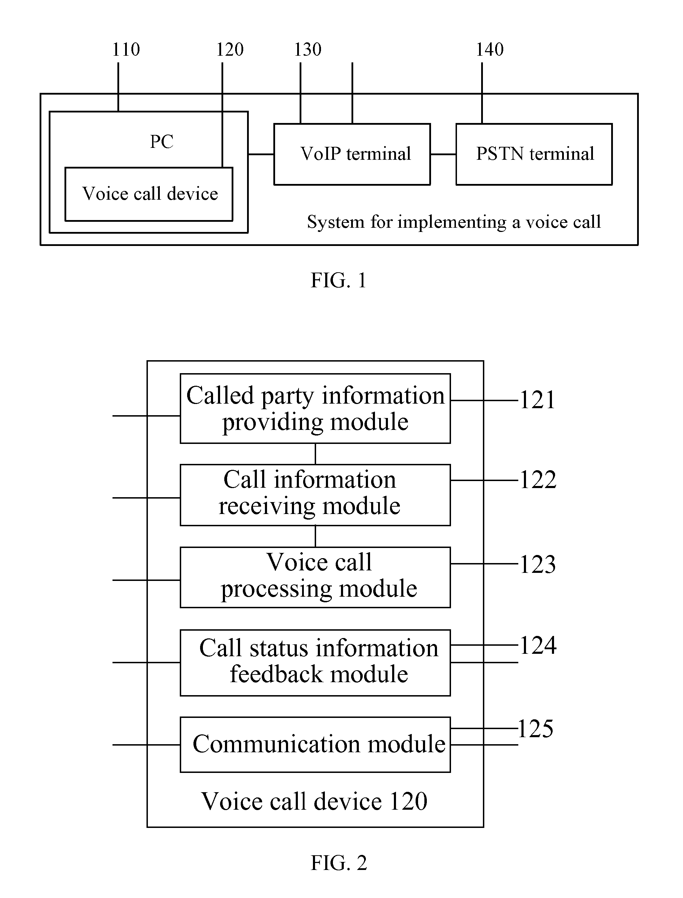

A system for implementing a voice call provided in an embodiment of the present invention, as shown in FIG. 1, may include a PC 110, a VoIP terminal 130, and a PSTN terminal 140.

### 1. The PC 110 is adapted to provide the called party information to the calling party, receive the call information confirmed by the calling party, perform voice call processing for the call information, and send the processed call information to the VoIP terminal 130.

In addition to the functional modules of a common PC, the PC 110 involved in the embodiment of the present invention may further include a voice call implementing device 120, which may be a software program stored in any medium for storing software programs and may be loaded by any device that can load software programs. It can be understood that the device 120 may consist of hardware for implementing the voice call function.

The voice call implementing device 120 provided in an embodiment of the present invention as shown in FIG. 2 may include: a called party information providing module 121, a call information receiving module 122, a voice call processing module 123, and a call status information feedback module 124.

### (1) The called party information providing module 121 is adapted to provide information about the called party to the calling party through an interactive interface.

Specifically, the called party information providing module 121 may be understood as a module with the phonebook function in the PC 110 to store the information about all called parties related to the calling party, including the called party name, phone number, address, age, and gender, which may be entered and changed by the calling party at any time. The called party information providing module 121 may further provide the search function. When the calling party enters any one or multiple information items about the called party, the called party information providing module 121 accordingly provides all the information about the called party that is related to the entered information.

When the calling party needs to initiate a voice call, the calling party may activate the called party information providing module 121 through an interactive interface (normally the display), and determine the called party information through input or search.

It can be understood that that calling party may also directly enter the called party information on the interactive interface to initiate a voice call.

### (2) The call information receiving module 122 is adapted to receive the call information confirmed by the calling party.

After entering or finding the called party information, the calling party may confirm the information by clicking OK or through double-click. At this time, the call information receiving module 122 receives the confirmed called party information, that is, the call information, and sends the call information to the voice call processing module 123.

### (3) The voice call processing module 123 is adapted to perform voice call processing for the call information received by the call information receiving module 122, and send the call information after processing to the VoIP terminal 130.

The process that the voice call processing module 123 performs voice call processing for the call information can be understood as constructing the voice dial signaling based on the call information confirmed by the calling party. For example, the voice call processing module 123 adopts the Session Initiation Protocol (SIP) to initiate an Invite message to the called party as the SIP client UA.

It should be noted that, the communication protocols are not limited to the SIP protocol during implementation of the embodiment of the present invention. Any communication protocol can be adopted for actual application in the embodiments of the present invention.

After performing voice call processing for the call information, the voice call processing module 123 sends the call information to the VoIP terminal 130 in the system.

### (4) The call status information feedback module 124 is adapted to feed back the call status information sent by the VoIP terminal 130 to the calling party through the interactive interface.

Specifically, when initiating a voice call to the called party based on the call information, the VoIP terminal 130 may feed back the current call status information to the PC 110 and PSTN terminal 140. In this case, the call status information feedback module 124 in the PC 110 may feed back the current call status information that is sent by the VoIP terminal 130 to the calling party to facilitate related processing by the calling party. The preceding status information about the current call includes in-a-call, busy, and pick-up. The call status information feedback module 124 may feed back the current call status information to the calling party through animation, image, sound, or figure.

The voice call implementing device 120 provided in an embodiment of the present invention may further include: (5) a communication module 125, adapted to interact with the VoIP terminal 130 for voice communication when the calling party selects the PC 110 for VoIP communication.

When the calling party selects the PC 110 for VoIP communication, the communication module 125 interacts with the VoIP terminal 130 to transmit signaling and data packets, and transmit the received voice information about the calling party through external devices of the PC 110, such as earphone and speaker, and the voice information about the called party, to the calling party, thus implementing VoIP communication between calling party and called party.

The PC 110 may establish communication connection with the VoIP terminal 130 through standard Ethernet interfaces, USB interfaces, and wireless interfaces.

### 2. The VoIP terminal 130 is adapted to receive the call information sent by the PC 110 and initiate a voice call to the called party based on the call information.

The VoIP terminal 130 may also be adapted to feed back the current call status information to the PC 110 and PSTN terminal 140.

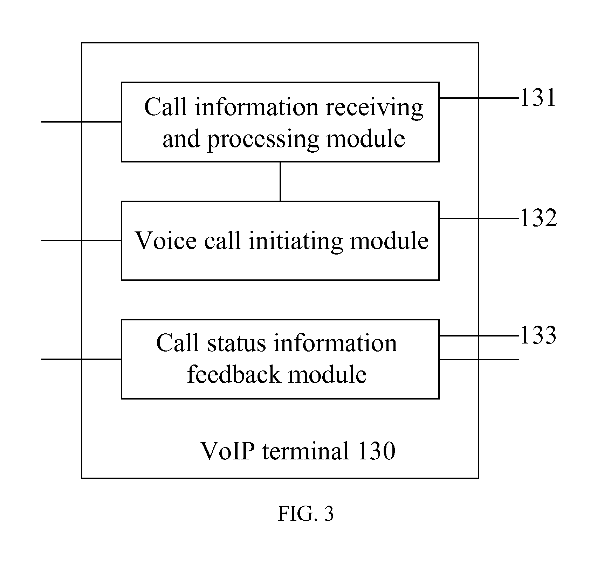

As shown in FIG. 3, in addition to the functional modules of a common VoIP terminal, the VoIP terminal 130 may also include: a call information receiving and processing module 131, a voice call initiating module 132, and a call status information feedback module 133.

### (1) The call information receiving and processing module 131 is adapted to receive the call information sent by the PC and perform internal protocol processing for the received call information.

After receiving the call information sent by the PC 110, the VoIP terminal 130 performs internal protocol processing for the call information, for example, by using the back-to-back user agent (B2BUA) processing function of the SIP protocol, and records the call information after processing.

The call information receiving and processing module 131 may also be adapted to terminate the voice call processing of the PC 110.

The voice call initiating module 132 is adapted to initiate a voice call to the called party based on the call information after internal protocol processing.

The voice call initiating module 132 re-initiates a voice call to the called party based on the call information after internal protocol processing.

### (2) The call status information feedback module 133 is adapted to feed back the current call status information to the PC 110 and PSTN terminal 140.

The VoIP terminal 130 may be adapted to feed back the current call status information to the PC 110 and PSTN terminal 140. Specifically, the VoIP terminal 130 replicates the signaling replied by the homing communication terminal of the called party, such as the current call status information including in-a-call, busy, and pick-up, and feeds back the replicated current status information to the PC 110 and PSTN terminal 140.

When replicating the current call status information, the VoIP terminal 130 may use the B2BUA processing function in the extended SIP protocol to enable it with the replication function, replicate the signaling packet that carries the current call status information, and feed back the replicated signaling packet to the PC 110 and PSTN terminal 140. The PC 110 and PSTN terminal 140 perform related response, for example, play the RBT, according to the received signaling packet. The user may choose to answer the call by using the PC 110 or PSTN terminal 140 and complete voice communication.

It is understandable that, in the embodiment of the present invention, a certain function of another communication protocol can be extended to provide the VoIP terminal 130 with the function of replicating the current call status, and that the number of connected PCs (110) and PSTN terminals (140) can be used to determine the number of replicated current call status information items.

For example, during a voice call, if the PSTN terminal 140 that is connected with the VoIP terminal 130 picks up the phone, the VoIP terminal 130 may perform the following operations based on the current call status.

If the homing terminal of the called party does not answer the phone, and is in the ring-back tone state, the VoIP terminal constructs the call signaling information for the PSTN terminal 140 and plays the ring-back tone to the PSTN terminal 140.

If the homing terminal of the called party picks up the phone, the VoIP terminal 130 establishes communication connection between calling party and called party.

The operations after the PC 110 receives the call status information from the VoIP terminal 130 are covered in the description about the call status information feedback module 124 of the PC 110. Therefore, the operations are not repeated here.

### (3) The PSTN terminal 140 is adapted for information interaction with the VoIP terminal 130 to implement the voice call.

The PSTN terminal 140 involved in this embodiment may be any type of PSTN terminal, such as a common telephone. The function of the PSTN terminal 140 is basically the same as that of a common telephone.

The PSTN terminal 140 may be connected with the VoIP terminal 130 through a twisted pair.

It is understandable that the functional modules in the system for implementing a voice call in the preceding embodiment may be replaced by software codes, and stored in any storage media.

In the system for implementing a voice call provided in an embodiment of the present invention, related functional modules are added to the PC 110 and VoIP terminal 130, the call information confirmed by the calling party undergoes voice call processing, and the VoIP terminal 130 initiates a voice call to the called party based on the call information, thus conveniently and quickly implementing a VoIP call. The PCs are widely used, facilitating wide application of the system for implementing voice calls provided in the embodiment of the present invention. Furthermore, the system for implementing voice calls provided in the embodiment of the present invention requires software applications but no reconstruction on the existing devices. Therefore, this system is simple, convenient, reliable, and easy to use. In addition, the system for implementing voice calls provided in the embodiment of the present invention can replicate the current call status information, and feed back the information to the PC 110 and PSTN terminal 140 of the calling party. In this way, the calling party may select the PC 110 or PSTN terminal 140 for voice communication.

A method for implementing a voice call is provided in an embodiment of the present invention. The method includes initiating a voice call to the called party according to the call information received from the PC 110, and feeding back the current call status to the PC 110 and PSTN terminal 140, thus conveniently and quickly implementing a VoIP call at low cost.

To facilitate understanding, the process of applying the method for implementing a voice call in the system for implementing a voice call provided in an embodiment of the present invention is taken as an example to describe the process of implementing the method for implementing a voice call in the embodiment of the present invention. The process includes:
Step 41: The calling party initiates a call.

To implement a voice call, the calling party may activate the called party information providing module 121 in the PC 110 through any method, enter or query the information about the called party, and confirm the call information.

Step 42: The PC 110 performs voice call processing for the call information confirmed by the calling party, and sends the call information after processing to the VoIP terminal 130.

When the calling party confirms the called party information (normally the number of the homing terminal of the called party), namely, the call information, the voice call processing module 123 in the PC 110 performs voice call processing for the call information, and sends the call information after processing to the VoIP terminal 130.

Step 43: After receiving the call information, the VoIP terminal 130 performs internal protocol processing for the call information, and initiates a voice call to the called party according to the call information after internal protocol processing.

After receiving the call information from the PC 110, the VoIP terminal 130 performs internal protocol processing for the received call information, for example, by using the B2BUA function of the SIP protocol, records the call information after internal protocol processing, and then initiates a voice call to the called party according to the call information after internal protocol processing.

Step 44: The VoIP terminal 130 feeds back the current call status information.

The VoIP terminal 130 feeds back the current call status information received from the homing terminal of the called party to the PC 110 and PSTN terminal 140 respectively.

Specifically, the VoIP terminal 130 may use a certain processing function of a certain communication protocol to provide itself with the function of replicating the signaling packet that carries the current call status information, replicate the signaling packet of the current call status information according to the number of PCs and PSTN terminals, and feed back the information to the PCs and PSTN terminals.

Step 45: The PC 110 and PSTN terminal 140 perform related operations according to the current call status information received from the VoIP terminal 130.

Specifically, when the PC 110 receives the current call status information from the VoIP terminal 130, such as in-a-call, busy, and pick-up, the PC 110 may present the current call status information through animation, image, voice, or figure on the interaction interface to the calling party.

During the call, the calling party picks up the PSTN terminal 140. At this time, the VoIP terminal 130 can sense that the PSTN terminal 140 is picked up. Therefore, the VoIP terminal 130 establishes communication connection with the PSTN terminal 140 to feed back the current call status information to the PSTN terminal 140. If the current called party does not pick up the PSTN terminal 140, the VoIP terminal 130 constructs the signaling for playing the ring-back tone, and the calling party may hear the ring-back tone through the PSTN terminal 140. If the current called party picks up the phone, the VoIP terminal establishes the communication connection between the homing PSTN terminal 140 of the calling party and the homing communication terminal of the called party.

Step 46: The calling party selects the PC 110 or PSTN terminal 140 for voice communication.

The calling party may select the PC 110 or PSTN terminal 140 for voice communication with the called party.

In the method for implementing a voice call provided in the preceding embodiment of the present invention, related functional modules are added to the PC 110 and VoIP terminal 130, the call information confirmed by the calling party undergoes voice call processing, and the VoIP terminal 130 initiates a voice call to the called party based on the call information, thus conveniently and quickly implementing a VoIP call at low cost. The PC 110s are widely used, facilitating wide application of the method for implementing voice calls provided in the embodiment of the present invention. In addition, the method for implementing voice calls provided in the embodiment of the present invention requires software applications but no reconstruction on the existing devices. Therefore, this method is simple, convenient, reliable, and easy to use. In addition, the method for implementing voice calls provided in the embodiment of the present invention can replicate the current call status information, and feed back the information to the PC 110 and PSTN terminal 140 of the calling party respectively. In this way, the calling party may select the PC 110 or PSTN terminal 140 for voice communication.

Furthermore, the method, system, and device for implementing a voice call provided in embodiments of the present invention also apply to the process of called voice communication. That is, when the homing communication terminal of the user performs the called voice communication service, the VoIP terminal 130 may replicate the called party information and send the replicated called party information to the homing PC 110 and PSTN terminal 140 of the user. The PC 110 and PSTN terminal 140 make related response, such as alerting, according to the received called party information. The user may select the PC 110 or PSTN terminal 140 to answer the call. Therefore, the preceding technical scheme shall fall in the scope of protection of the present invention.

The preceding embodiments are preferred implementation methods of the present invention. The protection scope of this invention, however, is not limiter to these embodiments. Those skilled in the art can easily make modifications or replacements within the technical scope of the present invention. This invention covers all such modifications and replacements. Therefore, the protection scope specified in the claims of the present invention shall prevail.

## Claims

1. A method for implementing a voice call, comprising:
receiving call information sent by a personal computer, PC; and
initiating a voice call to a called party, and sending status information about the current voice call to the PC and a Public Switched Telephone Network, PSTN, terminal respectively.

2. The method according to claim 1, wherein:
the call information is call information after voice call processing is performed by the PC on call information confirmed by a calling party.

3. The method according to claim 1 or 2, wherein the initiating of the voice call to the called party comprises:
performing internal protocol processing on the received call information; and
recording the call information after internal protocol processing, and initiating the voice call to the called party according to the call information after internal protocol processing.

4. The method according to claim 1, wherein, after sending the status information about the current call to the PC and the PSTN terminal respectively, the method further comprises:
receiving, by the PC and the PSTN terminal, the status information about the current call, and sending the status information to a calling party.

5. The method according to claim 1, further comprising:
receiving the called party information sent by a calling party, and sending the called party information to the PC and the PSTN terminal respectively.

6. A system for implementing a voice call, comprising: a personal computer, PC; a Voice over Internet Protocol, VoIP, terminal; and a Public Switched Telephone Network, PSTN, terminal, wherein:
the PC is adapted to receive call information determined by a calling party, send the call information to the VoIP terminal after performing voice call processing on the call information, receive status information about the current voice call, and send the status information about the current voice call to the calling party;
the VoIP terminal is adapted to receive the call information sent by the PC, initiate the voice call to a called party according to the call information, and send the status information about the current voice call to the PC and the PSTN terminal respectively; and
the PSTN terminal is adapted to receive the status information about the current call, send the status information about the current call to the calling party, exchange information with the VoIP terminal to complete the voice call when the calling party selects to use the PSTN terminal to perform VoIP communication.

7. The system according to claim 6, wherein the PC is connected with the VoIP terminal through a standard Ethernet interface, a USB interface, or a wireless interface.

8. A device for implementing a voice call, wherein the device is loaded in a personal computer, PC, and comprises:
a called party information providing module, adapted to provide information about a called party to a calling party through an interactive interface;
a call information receiving module, adapted to receive call information confirmed by the calling party; and
a voice call processing module, adapted to perform voice call processing on the call information received by the call information receiving module, and send the call information after processing to a Voice over Internet Protocol, VoIP, terminal.

9. The method according to claim 8, further comprising:
a call status information feedback module, adapted to feed back call status information sent by the VoIP terminal to the calling party through the interactive interface; and
a communication module, adapted to interact with the VoIP terminal for voice communication when the calling party selects to use the PC to perform VoIP voice communication.

10. A Voice over Internet Protocol, VoIP, terminal for implementing a voice call, comprising:
a call information receiving and processing module, adapted to receive call information sent by a personal computer, PC, and perform internal protocol processing on the received call information;
a voice call initiating module, adapted to initiate a voice call to a called party according to the call information after internal protocol processing; and
a call status information feedback module, adapted to feed back status information about a current call to the PC and a Public Switched Telephone Network, PSTN, terminal respectively.

11. The VoIP terminal according to claim 10, wherein the call information receiving and processing module is further adapted to terminate voice call processing of the PC.
